(19)

Europäisches
Patentamt
European
Patent Office
Office européen
des brevets

(11) **EP 2 958 076 A1**

(12) **EUROPEAN PATENT APPLICATION**

(43) Date of publication:
**23.12.2015   Bulletin 2015/52**

(51) Int Cl.:
***G06T 5/00*** *(2006.01)*      ***G06T 5/50*** *(2006.01)*

(21) Application number: **15172968.8**

(22) Date of filing: **19.06.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **20.06.2014   EP 14305971**

(71) Applicant: **Thomson Licensing**
**92130 Issy-les-Moulineaux (FR)**

(72) Inventors:
• **Boitard, Ronan**
**35576 CESSON-SEVIGNE (FR)**

• **Thoreau, Dominique**
**35576 CESSON-SEVIGNE (FR)**
• **Turkan, Mehmet**
**35576 CESSON-SEVIGNE (FR)**
• **Bouatouch, Kadi**
**35042 RENNES (FR)**
• **Cozot, Rémi**
**35042 RENNES (FR)**

(74) Representative: **Huchet, Anne**
**Technicolor**
**1, rue Jeanne d'Arc**
**92443 Issy-les-Moulineaux Cedex (FR)**

(54)   **Method and apparatus for dynamic range expansion of LDR video sequence**

(57)      A method and apparatus for dynamic range expansion of an LDR video sequence are suggested. The suggested method comprises the steps of: acquiring the LDR video sequence and at least one HDR panoramas concurrently, an image in said HDR encompassing a wider field of view than an image in said LDR; determining a dynamic range expansion operator based on the LDR video sequence and the HDR panoramas; and applying the determined dynamic range expansion operator on the LDR video sequence.

```
                                              ┌─────────────────────────┐ ── S110
                                              │ Acquiring an LDR video  │
                                              │ sequence and at least   │
                                              │ one HDR panoramas       │
                                              │ concurrently            │
                                              └─────────────────────────┘
                                                          │
                                              ┌─────────────────────────┐ ── S120
                   100                        │ Determining a dynamic   │
                    ↘                         │ range expansion         │
                                              │ operator based on the   │
                                              │ LDR video sequence and  │
                                              │ the HDR panoramas       │
                                              └─────────────────────────┘
                                                          │
                                              ┌─────────────────────────┐ ── S130
                                              │ Applying the determined │
                                              │ dynamic range expansion │
                                              │ operator on the LDR     │
                                              │ video sequence          │
                                              └─────────────────────────┘
```

Fig. 1

**Description**

**TECHNICAL FIELD**

The present disclosure generally relates to the technical field of image processing, and particularly, to a method and an apparatus for dynamic range expansion of a Low Dynamic Range (LDR) video sequence.

**BACKGROUND**

As an enhanced video processing technique for adapting an LDR video sequence to a High Dynamic Range (HDR) display, dynamic range expansion that enables an LDR video sequence to be converted into an HDR video sequence has drawn extensive attention. The HDR display takes as input floating-point values representing physical luminance (in $cd/m^2$), while the luminance component of pixels of the LDR video sequence is represented as an integer value defined in a standard color space, For avoiding confusion, the term luma is used to refer to LDR pixel luminance.

To achieve the dynamic range expansion, two types of dynamic range expansion operators have been proposed: Expansion Operator (EO) and inverse Tone Mapping Operator (iTMO). The former type derives an HDR video sequence from an LDR video sequence that was originally captured by an LDR camera. The latter type instead reconstructs an HDR video sequence from an LDR video sequence that was converted through tone mapping from an HDR video sequence originally captured by an HDR camera.

In a scenario where an LDR video sequence is captured by an LDR camera, no information of tone mapping is available and therefore an iTMO cannot be used for expanding the dynamic range of the LDR video sequence. Furthermore, there are scenarios where the information available is insufficient for an EO to perform dynamic range expansion with high fidelity due to sensor saturation, light insufficiency, intensive contrast in the scene where the LDR video sequence is acquired, etc.

**SUMMARY**

In view of the foregoing, there is a need for dynamic range expansion of an LDR video sequence in the above-described undesirable scenarios.

According to a first aspect of the present disclosure, there is provided a method for dynamic range expansion of an LDR video sequence, comprising the steps of: acquiring the LDR video sequence and at least one HDR panoramas concurrently, an image in said HDR encompassing a wider field of view than an image in said LDR; determining a dynamic range expansion operator based on the LDR video sequence and the HDR panoramas; and applying the determined dynamic range expansion operator on the LDR video sequence.

In an embodiment, the dynamic range expansion operator may be an EO or an iTMO.

In an embodiment, the step of determining the dynamic range expansion operator based on the LDR video sequence and the HDR panoramas may comprise: matching each frame of the LDR video sequence with a portion of one of the HDR panoramas; and estimating parameters of the dynamic range expansion operator based on the respective frame of the LDR video sequence and the matched portion of one of the HDR panoramas, so that an HDR frame obtained by applying the dynamic range expansion operator on the respective frame of the LDR video sequence best approximates the matched portion of one of the HDR panoramas.

In an embodiment, the LDR video sequence and the at least one HDR panoramas may be acquired at different temporal and/or spatial resolutions.

According to a second aspect of the present disclosure, there is provided an apparatus for dynamic range expansion of an LDR video sequence, comprising: means for acquiring the LDR video sequence; means for acquiring at least one HDR panoramas while the LDR video sequence is acquired, an image in said HDR encompassing a wider field of view than an image in said LDR; means for determining a dynamic range expansion operator based on the LDR video sequence and the HDR panoramas; and means for applying the determined dynamic range expansion operator on the LDR video sequence.

In an embodiment, the dynamic range expansion operator is an Expansion Operator, EO, or an inverse Tone Mapping Operator, iTMO.

In an embodiment, the means for determining the dynamic range expansion operator based on the LDR video sequence and the HDR panoramas may comprise: units for matching each frame of the LDR video sequence with a portion of one of the HDR panoramas; and units for estimating parameters of the dynamic range expansion operator based on the respective frame of the LDR video sequence and the matched portion of one of the HDR panoramas, so that an HDR frame obtained by applying the dynamic range expansion operator on the respective frame of the LDR video sequence best approximates the matched portion of one of the HDR panoramas.

In an embodiment, the LDR video sequence and the at least one HDR panoramas are acquired at different temporal and/or spatial resolutions.

According to a third aspect of the present disclosure, there is provided Computer program comprising program code instructions executable by a processor for implementing the steps of a method according to the first aspect of the disclosure.

According to a fourth aspect of the present disclosure, there is provided Computer program product which is stored on a non-transitory computer readable medium and comprises program code instructions executable by a processor for implementing the steps of a method according to the first aspect of the disclosure.

## BRIEF DESCRIPTION OF THE DRAWINGS

The above and other objects, features, and advantages of the present disclosure will become apparent from the following descriptions on embodiments of the present disclosure with reference to the drawings, in which:

Figs. 1-2 are flow charts illustrating a method for dynamic range expansion of an LDR video sequence according to the present disclosure; and

Fig. 3 is a schematic diagram illustrating a structure of an apparatus for dynamic range expansion of an LDR video sequence according to the present disclosure.

## DETAILED DESCRIPTION OF EMBODIMENTS

In the discussion that follows, specific details of particular embodiments of the present techniques are set forth for purposes of explanation and not limitation. It will be appreciated by those skilled in the art that other embodiments may be employed apart from these specific details. Furthermore, in some instances detailed descriptions of well-known methods, interfaces, circuits, and devices are omitted so as not obscure the description with unnecessary detail.

Those skilled in the art will appreciate that some or all of the functions described may be implemented using hardware circuitry, such as analog and/or discrete logic gates interconnected to perform a specialized function, ASICs, PLAs, etc. Likewise, some or all of the functions may be implemented using software programs and data in conjunction with one or more digital microprocessors or general purpose computers.

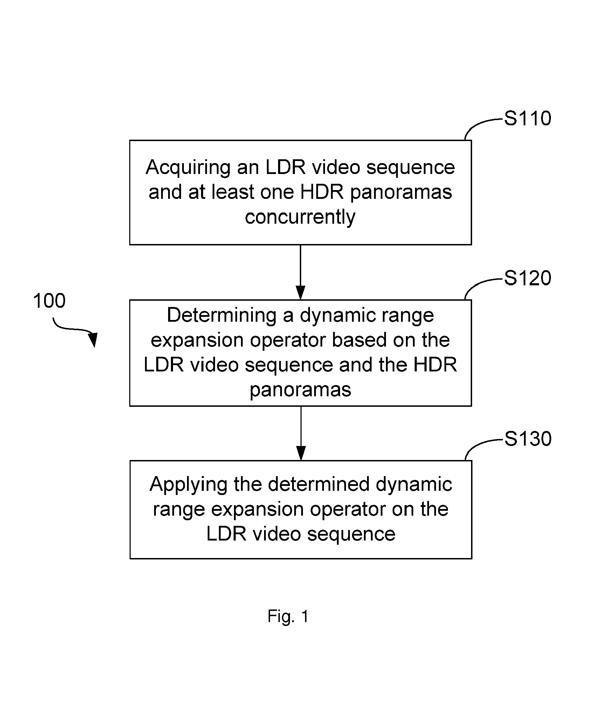

Now, reference will be made to Fig. 1 for illustrating a method 100 for dynamic range expansion of an LDR video sequence according to the present disclosure.

As illustrated, initially, the LDR video sequence and at least one HDR panoramas are acquired concurrently at step s110. Next, a dynamic range expansion operator is determined based on the LDR video sequence and the HDR panoramas at step s120. Then, the determined dynamic range expansion operator is applied on the LDR video sequence at step s130.

The acquisition of the LDR video sequence can be achieved by any commercially available camera, without any limitation on the spatial and/or temporal resolutions. For example, in terms of spatial resolution, the LDR video sequence may be acquired in the format of SD, HD or 4K. In terms of temporal resolution, the LDR video sequence may be acquired at 25, 50 or 100 fps.

The acquisition of the HDR panoramas can be performed by any HDR and panorama acquisition techniques, such as LizardQ panoramic camera, temporal bracketing, exposure bracketing, etc.

The dynamic range expansion operator may be either an EO or an iTMO. In either case, the HDR panoramas acquired concurrently with the LDR video sequence provide guiding information for efficiently determining a dynamic range expansion operator that converts the LDR video sequence to an HDR video sequence with high fidelity.

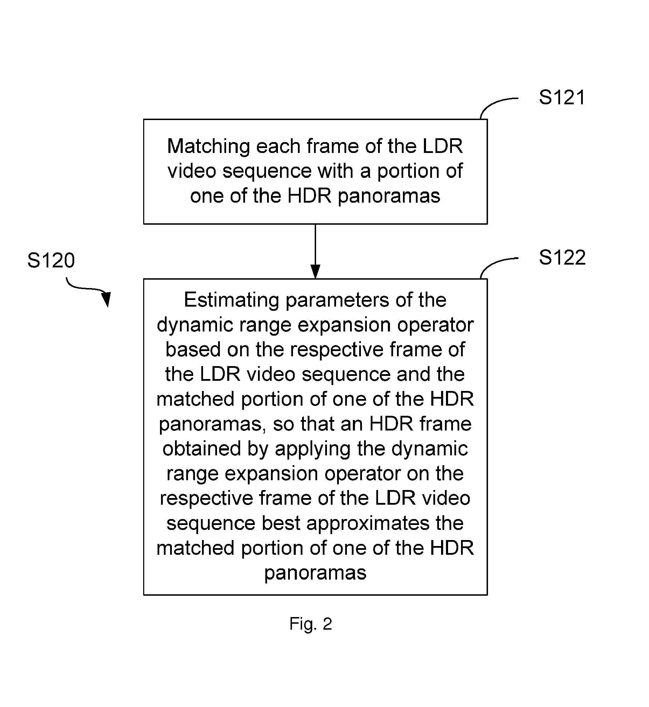

For the purpose of illustration rather than limitation, a feasible approach for determining the dynamic range expansion operator is determined based on the LDR video sequence and the HDR panoramas (i.e., for implementing step s120) will be described with respect to Fig. 2.

As illustrated, the approach begins with substep s121, where each frame of the LDR video sequence is matched with a portion of one of the HDR panoramas. Next, at substep s122, parameters of the dynamic range expansion operator are estimated based on the respective frame of the LDR video sequence and the matched portion of one of the HDR panoramas, so that an HDR frame obtained by applying the dynamic range expansion operator on the respective frame of the LDR video sequence best approximates the matched portion of one of the HDR panoramas.

As mentioned above, the dynamic range expansion may be an EO or an iTMO. The EO or the iTMO may take various forms. By way of example, an EO proposed in the reference by Akyüz, A. O., Fleming, R., Riecke, B. E., Reinhard, E., & Bülthoff, H. H. (2007), Do HDR displays support LDR content? in ACM SIGGRAPH 2007 papers on - SIGGRAPH '07 (p. 38). New York, New York, USA: ACM Press. doi:10.1145/1275808.1276425 (hereinafter referred to as Reference [1]) may be characterized by the following expansion formula:

$$L_w(x) = k \left( \frac{L_d(x) - L_{d,min}}{L_{d,max} - L_{d,min}} \right)^\gamma, \quad (1)$$

where k denotes the maximum luminance intensity of the HDR display, $\gamma$ denotes a non-linear scaling factor, $L_w(x)$ and $L_d(x)$ respectively denote the HDR luminance and LDR luma of a pixel in an HDR picture and its corresponding LDR picture indexed by x, $L_{d,min}$ and $L_{d,max}$ respectively denote the minimum and maximum lumas of the LDR picture.

In case the EO characterized by formula (1) is used with the approach illustrated in Fig. 2, a frame of the LDR video sequence is firstly matched with a portion of one of the HDR panoramas. Then, estimation algorithms such as LS and LMS approaches may be used for estimating parameter $\gamma$ in formula (1), based on luma values of pixels of the LDR frame and their corresponding luminance values in the matched portion of in the HDR panorama. Given the estimated parameter $\gamma$, the EO becomes deterministic. An HDR frame obtained by applying the EO on the LDR frame best approximates the matched portion of the HDR panorama in terms of error criteria specific to respective estimation algorithms.

Likewise, another EO proposed in the reference by Masia, B., Agustin, S., & Fleming, R. (2009), Evaluation of Reverse Tone Mapping Through Varying Exposure Conditions. (hereinafter referred to as Reference [2]) may be used with the approach illustrated in Fig. 2. This technique performs a gamma expansion on each color channel as follows:

$$C_w(x) = C_d^\gamma(x) \quad (2),$$

where x denotes index of pixels in an LDR picture and its corresponding HDR picture and $\gamma$ is computed in accordance with the following formula:

$$\gamma(k) = ak + b = a \left( \frac{\log(L_{d,H}) - \log(L_{d,min})}{\log(L_{d,max}) - \log(L_{d,min})} \right) + b \quad (3),$$

where $L_{d,H}$, $L_{d,min}$ and $L_{d,max}$ respectively denote the average, minimum and maximum lumas of the LDR picture. In that case, parameters a and b in formula (3) are to be estimated at substep s122.

In case an iTMO is used with the approached illustrated in Fig. 2, parameters of the iTMO are to be estimated based on the respective frame of the LDR video sequence and the matched portion of one of the HDR panoramas at substep s122. By way of example, the reference by Boitard, R., Thoreau, D., Cozot, R., & Bouatouch, K. (2013). Impact of Temporal Coherence-Based Tone Mapping on Video Compression, in Proceedings of EUSIPCO '13: Special Session on HDR-video. Marrakech, Morocco (hereinafter referred to as Reference [3]) proposes a TMO that converts luminance into luma using a sigmode defined as follows:

$$L_d = \frac{L_s}{1 + L_s} \cdot \left( 1 + \frac{L_s}{L_{white}^2} \right) \quad (4),$$

where $L_{white}$ denotes a luminance value used to burn areas with high luminance values, $L_w$ is a matrix containing luminance values of the original HDR picture, $L_d$ is a matrix of the same size as the original HDR picture and contain luma values, and $L_s$ is a scaled matrix of the same size as the original HDR picture and is computed as follows:

$$L_s = \frac{a}{k} \cdot L_w \quad (5),$$

where a is an exposure value, and k called the key of the picture corresponds to an indication of the overall brightness of the picture and is computed by:

$$k = exp \left( \frac{1}{N} \cdot \sum_{i=1}^{N} log\left( \delta + L_w(i) \right) \right) \quad (6),$$

where N denotes the number of pixels of the picture, $\delta$ is a value to prevent singularities, and $L_w(i)$ denotes the luminance value of the pixel i.

By fixing $L_{white}$ to infinity, it is possible to rewrite equation (4) as follows:

$$L_d = \frac{L_s}{1+L_s} \quad (7),$$

Accordingly, the corresponding iTMO is computed by inverting equation (7) and (5):

$$L_s = \frac{L_d}{1-L_d}(8),$$

$$L_w = \frac{k}{a} \cdot L_s \quad (9),$$

where k and a are the same as in equation (5).

In this case, the iTMO to be applied on the LDR video sequence at step s130 can be determined by matching each frame of the LDR video sequence with a portion of one of the HDR panoramas at step s121 and estimating parameters k and a in formula (9) based on the respective frame of the LDR video sequence and the matched portion of one of the HDR panoramas at substep s122.

In some embodiments, the LDR video sequence and the at least one HDR panoramas may be acquired at different temporal and/or spatial resolutions. For example, the HDR panoramas may be acquired at a rate of 1 panorama per second or even 1 panorama every 5 seconds, which is much smaller than the rate for acquiring the LDR video sequence. In that case, for matching each frame of the LDR video sequence with a portion of one of the HDR panoramas, interpolation and/or scaling processes may be performed on the HDR panoramas.

Note that the use of HDR panoramas as proposed herein provides several advantages over the use of ordinary HDR images. Firstly, a single HDR panorama may be valid for several LDR shots even if there is camera motion (such as translation, zoom, rotation, etc.) On the contrary, if ordinary HDR pictures were used, then interpolation between HDR pictures would be required quite often. Secondly, iTMOs determined with the assistance of original HDR pictures can be unstable over time and may create temporal artifacts, while a panorama provides information of the whole scene which is much more coherent. Thirdly, if two cameras positioned at different places are used, the two resulting shots will hardly be correlated. However, the use of panorama facilitates the correlation, and temporal coherency in the inverse tone mapping can be ensured in case of change of shooting point. Fourthly, the use of panorama avoids the need to perform an analysis of the full sequence for finding the brightest element in the scene so as to perform an inverse tone mapping which ensures temporal brightness coherency.

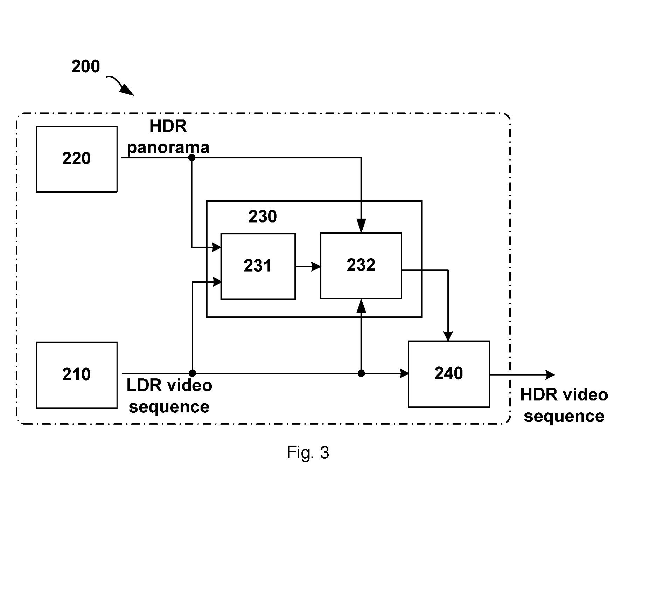

In the following, a structure of an apparatus 200 for dynamic range expansion of an LDR video sequence according to the present disclosure will be described with reference to Fig. 3.

As illustrated, the apparatus 200 comprises means 210 for acquiring the LDR video sequence and means 220 for acquiring at least one HDR panoramas while the LDR video sequence is acquired. The LDR video sequence acquired by the means 210 is then provided to means 230 for determining a dynamic range expansion operator based on the LDR video sequence and the HDR panoramas provided from the means 220. The LDR video sequence acquired by the means 210 is also provided to means 240 for applying the dynamic range expansion operator determined by the means 230 on the LDR video sequence.

In further detail, the means 230 may comprise units 231 and 232. The unit 231 is for matching each frame of the LDR video sequence with a portion of one of the HDR panoramas. The unit 232 is for estimating parameters of the dynamic range expansion operator based on the respective frame of the LDR video sequence and the matched portion of one of the HDR panoramas, so that an HDR frame obtained by applying the dynamic range expansion operator on the respective frame of the LDR video sequence best approximates the matched portion of one of the HDR panoramas.

Correspondingly to the inventive method described with respect to Figs. 1 and 2, either an EO or an iTMO may be determined by the means 230, and the means 210 and 220 may acquire the HDR panoramas and the LDR video sequence at different temporal and/or spatial resolutions.

The present disclosure is described above with reference to the embodiments thereof. However, those embodiments are provided just for illustrative purpose, rather than limiting the present disclosure. The scope of the disclosure is defined by the attached claims as well as equivalents thereof. Those skilled in the art can make various alternations and modifications without departing from the scope of the disclosure, which all fall into the scope of the disclosure.

**Claims**

1. A method (100) for dynamic range expansion of a Low Dynamic Range, LDR, video sequence, comprising:

   acquiring (s110) the LDR video sequence and at least one High Dynamic Range, HDR, panoramas concurrently, an image in said HDR encompassing a wider field of view than an image in said LDR;
   determining (s120) a dynamic range expansion operator based on the LDR video sequence and the HDR panoramas; and
   applying (s130) the determined dynamic range expansion operator on the LDR video sequence.

2. The method (100) of claim 1, wherein the dynamic range expansion operator is an Expansion Operator, EO, or an inverse Tone Mapping Operator, iTMO.

3. The method (100) of claim 1 or 2, wherein the determining (s120) the dynamic range expansion operator based on the LDR video sequence and the HDR panoramas comprises:

   matching (s121) each frame of the LDR video sequence with a portion of one of the HDR panoramas; and
   estimating (s122) parameters of the dynamic range expansion operator based on the respective frame of the LDR video sequence and the matched portion of one of the HDR panoramas, so that an HDR frame obtained by applying the dynamic range expansion operator on the respective frame of the LDR video sequence best approximates the matched portion of one of the HDR panoramas.

4. The method (100) of any of claims 1-3, wherein the LDR video sequence and the at least one HDR panoramas are acquired at different temporal and/or spatial resolutions.

5. An apparatus (200) for dynamic range expansion of a Low Dynamic Range, LDR, video sequence, comprising:

   means (210) for acquiring the LDR video sequence;
   means (220) for acquiring at least one High Dynamic Range, HDR panoramas while the LDR video sequence is acquired, an image in said HDR encompassing a wider field of view than an image in said LDR;
   means (230) for determining a dynamic range expansion operator based on the LDR video sequence and the HDR panoramas; and
   means (240) for applying the determined dynamic range expansion operator on the LDR video sequence.

6. The apparatus (200) of claim 5, wherein the dynamic range expansion operator is an Expansion Operator, EO, or an inverse Tone Mapping Operator, iTMO.

7. The apparatus (200) of claim 5 or 6, wherein the means (230) for determining the dynamic range expansion operator based on the LDR video sequence and the HDR panoramas comprises:

   units (231) for matching each frame of the LDR video sequence with a portion of one of the HDR panoramas; and
   units (232) for estimating parameters of the dynamic range expansion operator based on the respective frame of the LDR video sequence and the matched portion of one of the HDR panoramas, so that an HDR frame obtained by applying the dynamic range expansion operator on the respective frame of the LDR video sequence best approximates the matched portion of one of the HDR panoramas.

8. The apparatus (200) of any of claims 5-7, wherein the LDR video sequence and the at least one HDR panoramas are acquired at different temporal and/or spatial resolutions.

9. Computer program comprising program code instructions executable by a processor for implementing the steps of a method according to at least one of claims 1 to 4.

10. Computer program product which is stored on a non-transitory computer readable medium and comprises program code instructions executable by a processor for implementing the steps of a method according to at least one of claims 1 to 4.

S110

Acquiring an LDR video sequence
and at least one HDR panoramas
concurrently

100

S120

Determining a dynamic range
expansion operator based on the
LDR video sequence and the HDR
panoramas

S130

Applying the determined dynamic
range expansion operator on the
LDR video sequence

Fig. 1

S121

Matching each frame of the LDR video sequence with a portion of one of the HDR panoramas

S120

S122

Estimating parameters of the dynamic range expansion operator based on the respective frame of the LDR video sequence and the matched portion of one of the HDR panoramas, so that an HDR frame obtained by applying the dynamic range expansion operator on the respective frame of the LDR video sequence best approximates the matched portion of one of the HDR panoramas

Fig. 2

**200**

Fig. 3

Europäisches
Patentamt

European
Patent Office

Office européen
des brevets

# EUROPEAN SEARCH REPORT

Application Number

EP 15 17 2968

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/029675 A1 (SU GUAN-MING [US] ET AL) 30 January 2014 (2014-01-30) * paragraphs [0003], [0006] - [0007], [0022], [0026] - [0027], [0034] - [0038], [0041], [0046], [0047], [0086] - [0092]; figures 3,4 * | 1-10 | INV. G06T5/00 G06T5/50 |
| A | PIN-HUNG KUO ET AL: "Content-adaptive inverse tone mapping", VISUAL COMMUNICATIONS AND IMAGE PROCESSING (VCIP), 2012 IEEE, IEEE, 27 November 2012 (2012-11-27), pages 1-6, XP032309212, DOI: 10.1109/VCIP.2012.6410798 ISBN: 978-1-4673-4405-0 * section 3.1; figure 1 * | 1-10 | |
| A | FRANCESCO BANTERLE ET AL: "High Dynamic Range Imaging and Low Dynamic Range Expansion for Generating HDR Content", COMPUTER GRAPHICS FORUM, vol. 28, no. 8, 1 December 2009 (2009-12-01), pages 2343-2367, XP055031838, ISSN: 0167-7055, DOI: 10.1111/j.1467-8659.2009.01541.x * section 3 * | 1-10 | TECHNICAL FIELDS SEARCHED (IPC) G06T H04N |

The present search report has been drawn up for all claims

| Place of search | Date of completion of the search | Examiner |
|---|---|---|
| Munich | 15 July 2015 | Krawczyk, Grzegorz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**

EP 15 17 2968

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2015

| Patent document cited in search report | Publication date | Patent family member(s) | Publication date |
|---|---|---|---|
| US 2014029675 A1 | 30-01-2014 | CN 103563372 A | 05-02-2014 |
| | | EP 2697971 A1 | 19-02-2014 |
| | | EP 2782348 A1 | 24-09-2014 |
| | | JP 2014520414 A | 21-08-2014 |
| | | US 2014029675 A1 | 30-01-2014 |
| | | US 2014307796 A1 | 16-10-2014 |
| | | WO 2012142471 A1 | 18-10-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Do HDR displays support LDR content?. **AKYÜZ, A. O. ; FLEMING, R. ; RIECKE, B. E. ; REINHARD, E. ; BÜLTHOFF, H. H.** ACM SIGGRAPH 2007 papers on - SIGGRAPH '07. ACM Press, 2007, 38

- **MASIA, B. ; AGUSTIN, S. ; FLEMING, R.** *Evaluation of Reverse Tone Mapping Through Varying Exposure Conditions,* 2009